# EUROPÄISCHE PATENTSCHRIFT

(11) **EP 0 625 447 B1**
(45) Veröffentlichungstag und Bekanntmachung des Hinweises auf die Patenterteilung: **11.12.1996**
(21) Anmeldenummer: 94106120.2
(22) Anmeldetag: 20.04.1994
(51) Int. Cl.: B60R 21/16

(54) **Aufblasbarer Gassack für Rückhaltesysteme in Fahrzeugen**
Inflatable air bag for restraint systems in vehicles
Sac gonflable pour systèmes de retenue dans des véhicules

(30) Priorität: 30.04.1993 DE 4314347
(43) Veröffentlichungstag der Anmeldung: 23.11.1994
(73) Patentinhaber: TRW Occupant Restraint Systems GmbH, 73553 Alfdorf (DE)
(72) Erfinder: Krickl, Rudi, D-73527 Schwäbisch Gmünd (DE)
(74) Vertreter: Degwert, Hartmut, Dipl.-Phys.

(56) Entgegenhaltungen:
- US-A- 5 024 174
- US-A- 5 140 799
- PATENT ABSTRACTS OF JAPAN vol. 17, no. 430 (M-1460) 18. August 1993 & JP-A-05 092 746 (TOYO TAKASAGO KANDENCHI KK) 16. April 1993

## Beschreibung

Die Erfindung betrifft einen aufblasbaren Gassack für ein Rückhaltesystem in Fahrzeugen.

Ein solcher Gassack wird bei einer Fahrzeugkollision innerhalb von wenigen Millisekunden aufgeblasen und dient dem Fahrzeuginsassen als Aufprallschutzkissen. Für einen optimalen Schutz des Fahrzeuginsassen nehmen die bekannten Gassäcke im aufgeblasenen Zustand eine vorbestimmte Körperform ein. Die Körperform kann im Hinblick darauf, ob es sich um einen Gassack für den Fahrer oder Beifahrer handelt, unterschiedlich sein. Im allgemeinen werden die Gassäcke aus mehreren Textilteilen durch mehrere Nähte miteinander vernäht. Beispielsweise ist bekannt, einen ballonförmigen Gassack aus drei ebenen Gewebeteilen zu bilden: einer gestreckten Bahn, aus der die Mantelfläche gebildet wird, und zwei scheibenförmigen Seitenteilen, die durch je eine Naht mit der Mantelfläche verbunden sind.

Ein solcher Gassack ist beispielsweise aus der JP-A-05 092 746 oder der US-A-5 140 799 bekannt. Weiterhin ist bekannt, beispielsweise aus der US-A-5 024 174, daß ein Gassack durch das Vernähen von zwei kongruenten Gewebeteilen miteinander erhalten werden kann. In diesem Falle ergibt sich allerdings kein Gassack mit einer von sich aus dreidimensionalen Gestalt.

Der Erfindung liegt die Aufgabe zugrunde, einen aufblasbaren Gassack für Fahrzeuginsassen-Rückhaltesysteme dahingehend weiterzubilden, daß eine vereinfachte Herstellung ermöglicht wird.

Diese Aufgabe wird durch einen aufblasbaren Gassack für ein Rückhaltesystem in Fahrzeugen gelöst, der aus zwei getrennten, in einer Ebene abwickelbaren Textilbahnabschnitten besteht, deren Kanten mittels einer durchgehenden Naht miteinander vernäht sind und von denen einer allgemein keulenförmig und der andere allgemein schmetterlingsförmig ist. Diese Aufgabe wird weiterhin durch einen aufblasbaren Gassack für ein Rückhaltesystem in Fahrzeugen gelöst, der aus einem in einer Ebene abwickelbaren Textilbahnabschnitt besteht, dessen Kanten mittels einer durchgehenden Naht miteinander vernäht sind und der aus zwei einstückig miteinander verbundenen Textilteilen besteht, von denen einer allgemein keulenförmig und der andere allgemein schmetterlingsförmig ist. Auf diese Weise sind die Textilbahnabschnitte bzw. der Textilbahnabschnitt einfach durch Zuschnitt aus einem Gassackgewebe herzustellen und bei der Fertigung des Gassacks einfach zu handhaben. Die einander zugeordneten Kanten der Textilbahnabschnitte bzw. des Textilbahnabschnittes werden an einer vorbestimmten Stelle der Nähmaschine zugeführt und in einem Zug miteinander vernäht. Wenn der Gassack aus zwei getrennten Textilbahnabschnitten besteht, ergibt sich ein besonders geringer Verschnitt beim Zuschneiden dieser Teile. Dagegen ergibt sich bei der Gestaltung mit einem einzigen Textilbahnabschnitt eine besonders einfache Handhabung bei der Herstellung.

Unter Abwicklung ist in diesem Zusammenhang die längentreue Abbildung der sich im aufgeblasenen Zustand ohne Materialdehnung einstellenden Gassackoberfläche in einer Ebene zu verstehen. Bei der durch den aufgeblasenen Gassack sich einstellenden Körperform wird die Abwicklung der Gassackbegrenzungsfläche durch "Aufschneiden" entlang einer geeignet gewählten Kante und "Umklappen" in eine Ebene gebildet.

Bei einer erfindungsgemäßen Ausführungsform sind die zu vernähenden Kanten über ihren Verlauf gekrümmt ausgebildet. Durch den sich ergebenden runden Nahtverlauf kann die Kräfteverteilung auf die Nähte optimiert werden, da die Kräfte über die Naht nun nicht mehr ausschließlich senkrecht eingeleitet werden.

Um den Nähvorgang zu erleichtern, ist der Nahtanfang an den beiden einander zugeordneten Kanten der getrennten Textilbahnabschnitte markiert.

Weitere Vorteile der Erfindung ergeben sich aus der folgenden Beschreibung zweier Ausführungsformen und aus der Zeichnung, auf die Bezug genommen wird. In der Zeichnung zeigen:
Fig. 1 eine schematische Perspektivansicht eines vollständig aufgeblasenen Gassacks gemäß einer ersten Ausführungsform der vorliegenden Erfin dung,
Fig. 2 zwei Textilbahnabschnitte des Gassacks von Fig. 1; und
Fig. 3 einen Textilbahnabschnitt für einen Gassack gemäß einer weiteren Ausführungsform der vorliegenden Erfindung.

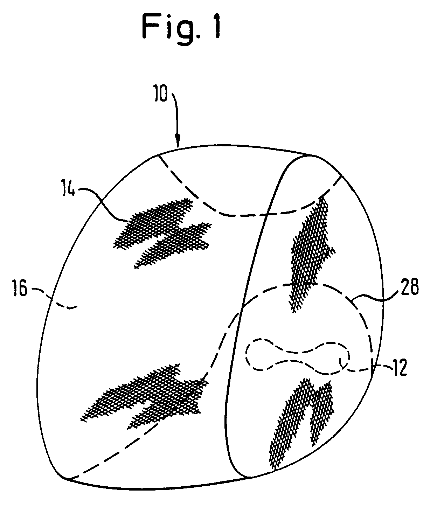

Der in Fig. 1 schematisch in vollständig aufgeblasenem Zustand gezeigte Gassack 10 eines Rückhaltesystems für Fahrzeuge ist mit seiner Einblasöffnung 12 an ein hier nicht dargestelltes Gehäuse eines herkömmlichen Gasgenerators angeschlossen. Der Gassack 10 besteht aus zwei flächigen Textilbahnabschnitten 14 und 16, die zusammen die Abwicklung der durch den aufgeblasenen Gassack 10 gebildeten Körperform bilden. Der Textilbahnabschnitt 14 ist allgemein keulenförmig und der Textilbahnabschnitt 16 allgemein schmetterlingsförmig ausgebildet. Die Länge der Kanten 18 und 20 der beiden Textilbahnabschnitte 14 und 16 ist demzufolge gleich.

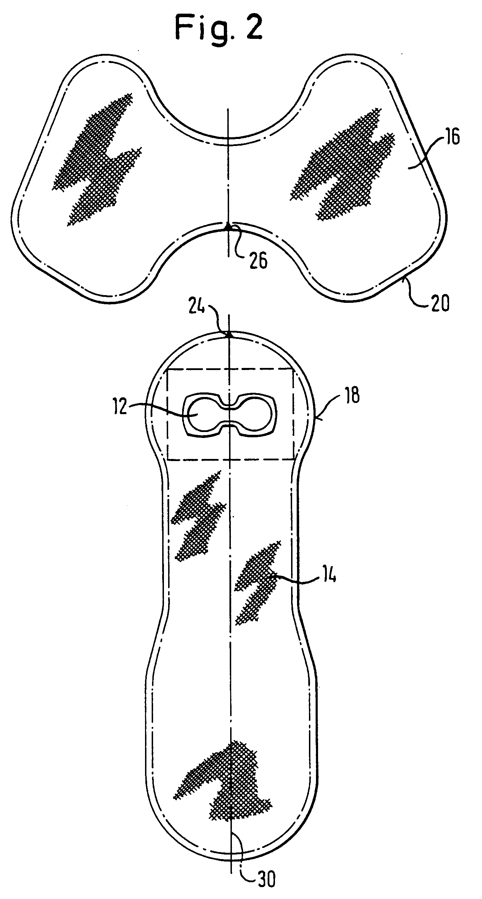

In dem Textilbahnabschnitt 14 ist die Einblasöffnung 12 für den Gasgenerator eingebracht (Fig. 2). Weiterhin weisen beide Textilbahnabschnitte 14 und 16 an ihren Kanten 18 und 20 eine Markierung 24 und 26 auf. Beim Zusammennähen der beiden Textilbahnabschnitte 14 und 16 werden die Markierungen 24, 26 an den Kanten 18 und 20 aneinandergelegt und bildet somit den Anfangs- und Endpunkt für die die beiden Textilbahnabschnitte 14 und 16 verbindende Naht 28. Der Nahtanfangspunkt bei den aneinanderliegenden Markierungen 24 und 26, wird in eine Nähmaschine gelegt, und die einander zugeordneten Kanten 18 und 20 werden ausgehend von dieser Markierung in einem Zug, d.h. ohne Ansetzen einer neuen Naht, miteinander vernäht. Die beiden Textilbahnabschnitte 14 und 16 sind bezüglich der Achse 30 symmetrisch ausgebildet (Fig. 2).

Durch die erfindungsgemäße Ausbildung kann sowohl die Anzahl der Teile als auch die Anzahl der Nähte vorteilhaft reduziert werden. Durch die zweiteilige Ausbildung gemäß den Figuren 1 und 2 kann für jeden Textilbahnabschnitt 14, 16 ein anderes Gassackgewebe verwendet werden, beispielsweise Gassackgewebe mit unterschiedlicher Luftdurchlässigkeit und/oder unterschiedlicher Festigkeit. Des weiteren kann die zweiteilige Ausbildung der Textilbahnabschnitte 14 und 16 einer Abwicklung der durch den aufgeblasenen Gassack gebildeten Körperform notwendig sein, um den Verschnitt von Gassackgewebe so gering wie möglich zu halten.

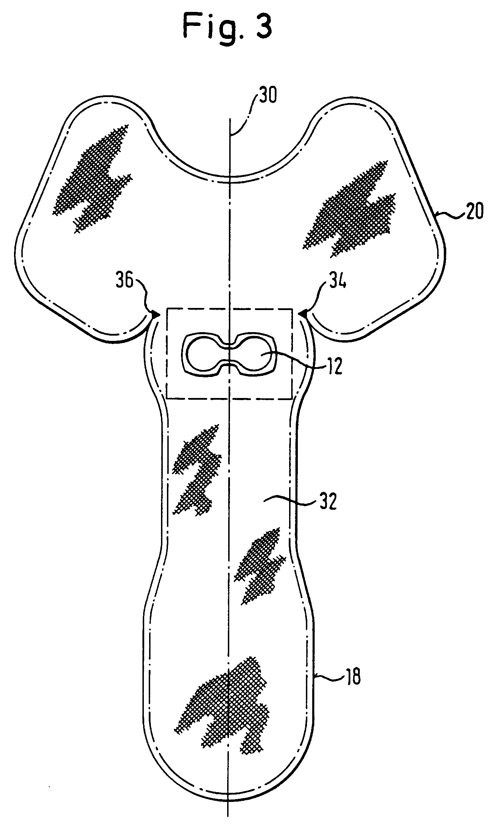

In Fig. 3 ist ein weiterer Textilbahnabschnitt 32 einer anderen Ausführungsform der Erfindung dargestellt. Dieser Textilbahnabschnitt 32 unterscheidet sich von der ersten Ausführungsform dadurch, daß er die Abwicklung der durch den aufgeblasenen Gassack 10 gebildeten Körperform in einem einzigen Textilbahnabschnitt zeigt. Auch dieser Textilbahnabschnitt 32 ist symmetrisch bezüglich der Achse 30 ausgebildet und weist die Einblasöffnung 12 auf. Die den Nahtanfang kennzeichnende Markierung ist mit dem Bezugszeichen 34 und die das Nahtende kennzeichnende Markierung mit dem Bezugszeichen 36 versehen. Auch bei dieser Ausführungsform kann der Gassack 10 mit einer einzigen durch-gehenden, in einem Zug herstellbaren Naht gefertigt werden.

Die zu vernähenden Kanten 18, 20 der beiden Ausführungsformen der Textilbahnabschnitte 14, 16 bzw. 32 sind über ihren Verlauf gekrümmt, so daß sich eine gebogene Naht 28 ergibt. Durch den gebogenen Nahtverlauf wird die Kräfteverteilung auf die Naht 28 optimiert, da nunmehr die Kräfte in unterschiedlicher Neigung über die Naht in den Textilbahnabschnitt 14, 16 bzw. 32 eingeleitet werden.

Aufgrund des erfindungsgemäßen Prinzips ergeben sich vielfältige Formen von flächigen Gewebeteilen, die die Abwicklung von unterschiedlichen Körperformen von aufgeblasenen Gassäcken bilden.

## Patentansprüche

1. Aufblasbarer Gassack (10) für ein Rückhaltesystem in Fahrzeugen, der aus zwei getrennten, in eine Ebene abwickelbaren Textilbahnabschnitten (14, 16) besteht, deren Kanten (18, 20) mittels einer durchgehenden Naht (28) miteinander vernäht sind und von denen einer allgemein keulenförmig und der andere allgemein schmetterlingsförmig ist.

2. Aufblasbarer Gassack nach Anspruch 1, **dadurch gekennzeichnet**, daß die beiden Textilbahnabschnitte (14, 16) aus unterschiedlichem Gassackgewebe bestehen.

3. Aufblasbarer Gassack (10) für ein Rückhaltesystem in Fahrzeugen, der aus einem in eine Ebene abwickelbaren Textilbahnabschnitt (32) besteht, dessen Kanten (18, 20) mittels einer durchgehenden Naht (28) miteinander vernäht sind und der aus zwei einstückig miteinander verbundenen Textilteilen besteht, von denen einer allgemein keulenförmig und der andere allgemein schmetterlingsförmig ist.

4. Aufblasbarer Gassack nach einem der vorhergehenden Ansprüche, **dadurch gekennzeichnet**, daß die zu vernähenden Kanten (18, 20) der Textilteile (14, 16) bzw. des Textilteils (32) über ihren Verlauf gekrümmt sind.

5. Aufblasbarer Gassack nach einem der vorhergehenden Ansprüche, **dadurch gekennzeichnet**, daß der Nahtanfang (24, 26; 34) an den beiden einander zugeordneten Kanten (18, 20) der Textilbahnabschnitte (14, 16) bzw. des Textilbahnabschnitts (32) markiert ist.

## Claims

1. An inflatable gas bag (10) for a vehicle occupant restaining system, comprising two separate textile web sections (14, 16) which can be developed in a plane and the edges (18, 20) of which are stitched together by a continuous seam (28), one of the textile web sections being generally club-shaped and the other being generally butterfly-shaped.

2. The inflatable gas-bag of claim 1, characterized in that the two textile web sections (14, 16) are made from different gas bag fabrics.

3. An inflatable gas bag (10) for a vehicle occupant restaining system, comprising a textile web section (32) which can be developed in a plane and the edges (18, 20) of which are stitched together by a continuous seam (28), the textile web section comprising two integrally formed textile parts, one of the textile parts being generally club-shaped and the other being generally butterfly-shaped.

4. The inflatable gas bag according to any of the above claims, characterized in that the edges (18, 20) of the textile parts (14, 16) or the textile part (32), which are to be stiched together, are curved throughout their extension.

5. The inflatable gas bag according to any of the above claims, characterized in that the start of the seam (24, 26; 34) is marked at the two associated edges (18, 20) of the textile parts (14, 16) or the textile part (32).

## Revendications

1. Coussin gonflable (10) destiné à un système de retenue dans des véhicules et constitué de deux pièces textiles séparées (14, 16) qui sont développables dans un même plan, dont les bords (18, 20) sont cousus ensemble par une couture continue (28), et dont une présente la forme générale d'une massue et l'autre la forme générale d'un papillon.

2. Coussin gonflable selon la revendication 1, caractérisé en ce que les deux pièces textiles (14, 16) sont réalisées dans différents tissus pour coussin gonflable.

3. Coussin gonflable (10) destiné à un système de retenue dans des véhicules et constitué d'une seule pièce textile (32) qui est développable dans un même plan, dont les bords (18, 20) sont cousus ensemble par une couture continue (28) et qui se compose de deux morceaux textiles qui font corps l'un avec l'autre et dont un présente la forme générale d'un massue et l'autre la forme générale d'un papillon.

4. Coussin gonflable selon l'une des revendications précédentes, caractérisé en ce que les bords (18, 20) à coudre des morceaux textiles (14, 16) ou du morceau textile (32) présentent un tracé courbe.

5. Coussin gonflable selon l'une des revendications précédentes, caractérisé en ce que le début (24, 26 ; 34) de la couture est repéré sur les deux bords (18, 20) associés l'un à l'autre des pièces textiles (14, 16) ou de la pièce textile (32).
